# EUROPEAN PATENT APPLICATION

(11) **EP 2 549 238 A2**
(43) Date of publication of application: **23.01.2013**
(21) Application number: 12174870.1
(22) Date of filing: 04.07.2012
(51) Int. Cl.: G01D 5/20, G01D 11/24

(54) **Resolver**

(30) Priority: 22.07.2011 JP 2011160882; 08.05.2012 JP 2012106833
(71) Applicant: JTEKT CORPORATION, Osaka-shi Osaka 542-8502 (JP)
(72) Inventor: Takei, Tomoyuki, Osaka-shi,, Osaka 542-8502 (JP); Kitahata, Kouji, Osaka-shi,, Osaka 542-8502 (JP); Kumeno, Toshiki, Osaka-shi,, Osaka 542-8502 (JP); Higashiyama, Yoshimichi, Osaka-shi,, Osaka 542-8502 (JP)
(74) Representative: Winter, Brandl, Fürniss, Hübner, Röss, Kaiser, Polte - Partnerschaft

(57) **Abstract**

A resolver stator (12) includes an annular first cover portion (53), an annular second cover portion (54), and a plurality of pillars (55). The first and second cover portions cover coils from both axial sides. The pillars couple the first and second cover portions, and are arranged between the adjacent teeth (46). Each pillar has circumferential side faces (55c) each of which has a radially inner end portion (55c1) that is arranged with a labyrinth clearance (S) left between the radially inner end portion and a radially inner end portion (46b) of the tooth next to the side face, and each of which is a concave curved surface so as to be further apart from the tooth from the radially inner end portion toward a radially outer end portion (55c2) of the side face.

## Description

### BACKGROUND OF THE INVENTION

### 1. Field of the Invention

The invention relates to a resolver that is used to detect the rotation angle (rotational position) of a rotary shaft.

### 2. Description of Related Art

A resolver is a type of angle detector used to detect the rotation angle (rotational position) of a rotary shaft, and includes a resolver stator and a resolver rotor. The resolver stator is formed into an annular shape, and is fixed at its outer periphery to a housing. In addition, multiple teeth are formed on the inner periphery of the resolver stator at predetermined intervals in the circumferential direction. Coils are wound around the respective teeth. The resolver rotor is arranged radially inward of the resolver stator with a clearance left therebetween. The resolver rotor is fitted to the rotary shaft supported by the housing via a rolling bearing so as to be rotatable together with the rotary shaft (for example, see Japanese Patent Application Publication No. 2006-90511 (JP 2006-90511 A) and Japanese Patent Application Publication No. 2007-336714 (JP 2007-336714 A)).

The above-described resolver is used to detect the rotation angle of a rotary shaft of an electric motor (a motor, a generator, or the like) of a hybrid vehicle, for example. In this case, in order to lubricate a rolling bearing that supports the rotary shaft, lubricating oil is injected at high pressure from oil feeding ports, formed in the outer periphery of the rotary shaft, toward the rolling bearing. At this time, the lubricating oil may be injected to an inner peripheral portion of the resolver stator arranged near the rolling bearing. Therefore, if foreign matter is contained in the lubricating oil, the foreign matter enters a space between adjacent teeth. This may give damage to coils.

### SUMMARY OF THE INVENTION

It is an object of the invention to provide a resolver with which damage to coils is suppressed.

An aspect of the invention relates to a resolver (10) that includes: an annular resolver stator that is fixed to a housing, and that has a plurality of teeth around which coils are wound, which are formed on an inner periphery of the resolver stator, and which are arranged at given intervals in a circumferential direction; and a resolver rotor that is arranged radially inward of the resolver stator, and that is rotatable together with a rotary shaft that is supported by the housing via a rolling bearing. The resolver stator includes a pair of cover portions that cover the coils from both axial sides of the resolver stator, and a plurality of pillars arranged between the adjacent teeth to couple the cover portions to each other. Each pillar has circumferential side faces each of which has a radially inner end portion that is arranged with a labyrinth clearance left between the radially inner end portion and a radially inner end portion of the tooth next to the side face, and each of which is a concave curved surface or a tapered surface so as to be further apart from the tooth from the radially inner end portion toward a radially outer end portion of the side face.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a side sectional view that shows a resolver according to a first embodiment of the invention;
FIG. 2 is a front view that shows a resolver stator and a resolver rotor of the resolver;
FIG. 3 is a partially enlarged front view of the resolver stator;
FIG. 4 is a front view that shows a stator core of the resolver stator;
FIG. 5 is a perspective view that shows the resolver stator;
FIG. 6 is an exploded perspective view that shows a cover member of the resolver stator; and
FIG. 7 is a partially enlarged front view of a resolver stator of a resolver according to a second embodiment of the invention.

### DETAILED DESCRIPTION OF EMBODIMENTS

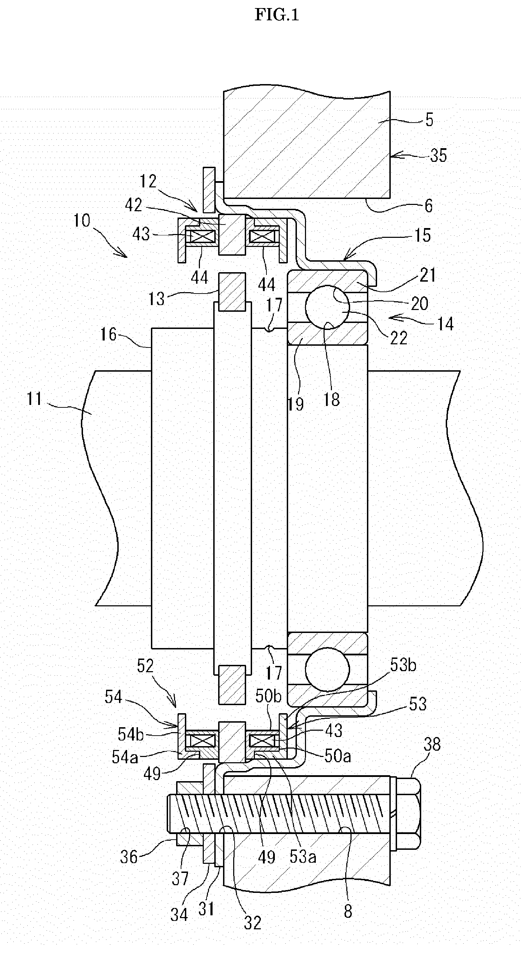

Embodiments of the invention will be described with reference to the accompanying drawings. FIG. 1 is a side sectional view that shows a resolver 10 according to a first embodiment of the invention. The resolver 10 according to the first embodiment is used to detect the rotation angle (rotational position) of a rotary shaft 11 of a motor generator used in a hybrid vehicle, for example. Although not shown in FIG. 1, a rotor of the motor generator is fixed to the rotary shaft 11 (at a position on the left side of the resolver 10 in an example shown in FIG. 1). In addition, the rotary shaft 11 is rotatably supported in a housing 35 by a rolling bearing 14 and a rolling bearing (not shown) that is provided at a position (at a position on the left side of the resolver 10 in the example shown in FIG. 1) apart from the rolling bearing 14 in the axial direction.

A motor stator (not shown) of the motor generator is fixed (at a position on the left side of the resolver 10 in the example shown in FIG. 1) inside the housing 35. The housing 35 has a wall (hereinafter, referred to as "housing wall 5") at one axial side thereof. The housing wall 5 has a wall face that is perpendicular to the rotary shaft 11. The housing wall 5 has an opening 6 through which the rotary shaft 11 is passed. The resolver 10 is fitted to the housing wall 5.

The resolver 10 includes a resolver stator 12 and a resolver rotor 13. The resolver stator 12 is fixed to the housing 35. The resolver rotor 13 is arranged radially inward of the resolver stator 12. Furthermore, the resolver 10 according to the first embodiment includes the rolling bearing 14 that has the function of supporting the rotary shaft 11 such that the rotary shaft 11 is rotatable relative to the housing 35. The resolver stator 12 and the rolling bearing 14 are assembled together via a case member 15 into one unit. In the first embodiment, a fitting portion 16 is formed integrally with the rotary shaft 11, and the resolver rotor 13 is fitted to the outer periphery of the fitting portion 16 and is rotatable together with the rotary shaft 11. Although not shown in FIG. 1, the fitting portion 16 may be a sleeve that is formed separately from the rotary shaft 11, and the resolver rotor 13 may be fixed to the rotary shaft 11 via the sleeve.

The rolling bearing 14 includes an inner ring 19 and an outer ring 21. The inner ring 19 has an inner ring raceway 18. The outer ring 21 is arranged radially outward of the inner ring 19 so as to be concentric with the inner ring 19. The outer ring has an outer ring raceway 20. The rolling bearing 14 further includes a plurality of rolling elements 22 that are rollably arranged between the inner ring raceway 18 and the outer ring raceway 20. The rolling bearing 14 in the first embodiment is a ball bearing that includes balls as the rolling elements 22. The outer ring 21 of the rolling bearing 14 is fixed to the case member 15. The inner ring 19 is fixed to the rotary shaft 11 (fitting portion 16) at a position near the resolver rotor 13. That is, the rolling bearing 14 is provided between the case member 15 and the rotary shaft 11 to allow relative rotation between the case member 15 and the rotary shaft 11.

A plurality of oil feeding ports 17 is formed in the outer periphery of the fitting portion 16 at a portion between the resolver rotor 13 and the rolling bearing 14. The oil feeding ports 17 are formed at predetermined intervals in the circumferential direction. The oil feeding ports 17 are connected to a hydraulic pump (not shown) via an oil feeding passage (not shown) formed in the rotary shaft 11. When the hydraulic pump is driven, lubricating oil is injected radially outward from the oil feeding ports 17 at high pressure, and the rolling bearing 14 is lubricated.

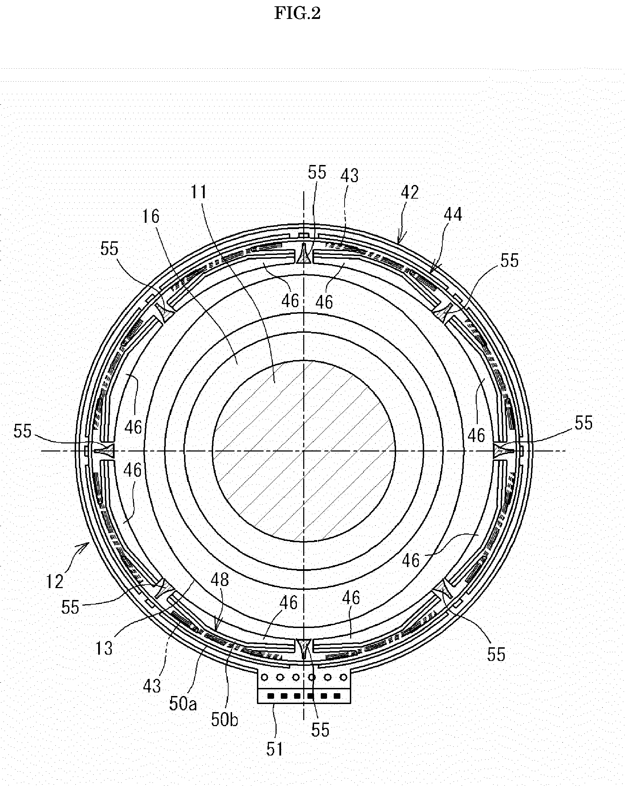

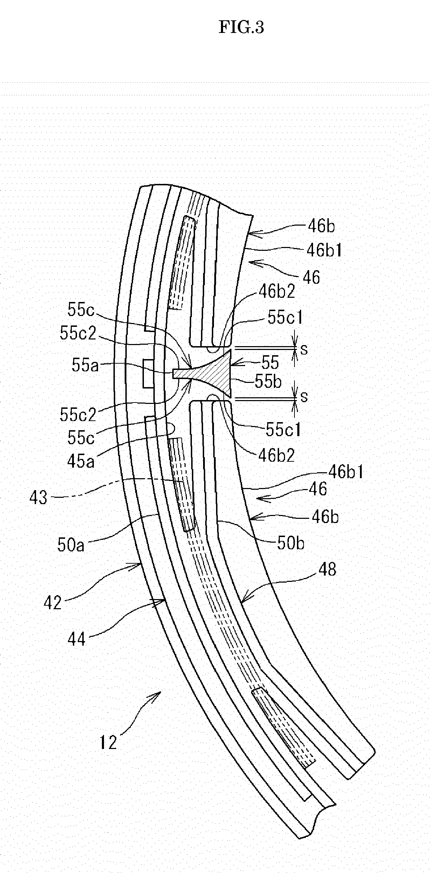

FIG. 2 is a front view that shows the resolver stator 12 and the resolver rotor 13. FIG. 3 is a partially enlarged front view of the resolver stator 12. The resolver stator 12 is formed in an annular shape, and includes a stator core 42, coils 43 and insulators 44. As shown in FIG. 1, the outer periphery of the stator core 42 is fitted to the inner periphery of the case member 15. In this way, the stator core 42 is fitted to the case member 15.

As shown in FIG. 1, the case member 15 is fitted to the housing wall 5 by a fixing ring 34. The fixing ring 34 has a plurality of bosses 36 arranged at regular intervals in the circumferential direction, and each boss 36 has a bolt hole 37. The fixing ring 34 is placed on a flange 31 of the case member 15, and bolts 38 inserted in holes 8 formed in the housing wall 5 and holes 32 formed in the flange 31 are screwed to the respective bolt holes 37 of the bosses 36. Thus, the case member 15 is fixed to the housing wall 5.

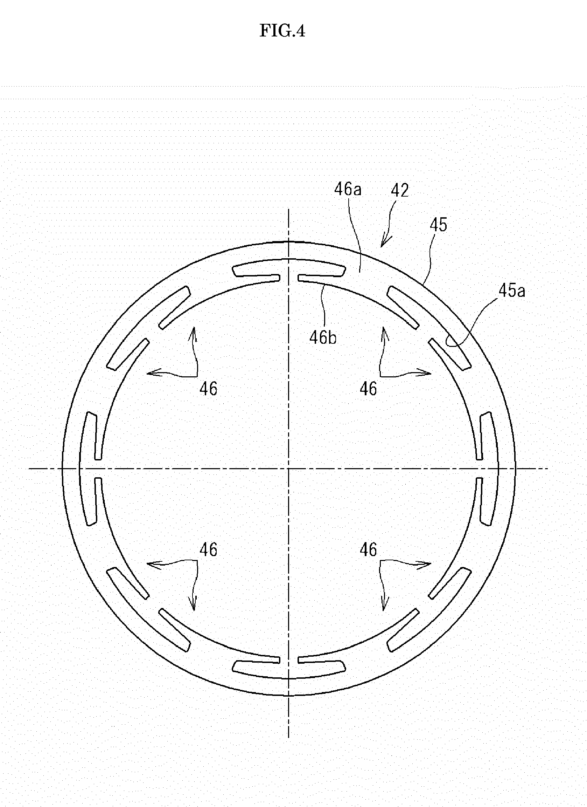

FIG. 4 is a front view that shows the stator core 42. The stator core 42 is formed of a single layer or multiple layers of magnetic materials, such as silicon steel plates. The stator core 42 has an annular portion 45 and a plurality of (eight in the illustrated example) teeth 46 formed integrally with the annular portion 45. The teeth 46 protrude radially inward from an inner periphery 45a of the annular portion 45, and are formed at regular intervals in the circumferential direction. In addition, each of the teeth 46 is formed of a base portion 46a and a distal end portion 46b. The base portion 46a is formed to have a smaller circumferential width than the distal end portion 46b. The distal end portion 46b is formed in such a shape that the distal end portion 46b largely extends from the base portion 46a on both sides in the circumferential direction. Then, an exciting coil 43 and an output coil 43 are wound around the base portion 46a of each tooth 46.

As shown in FIG. 2, the insulators 44 each are formed in an annular shape and are made of an insulating material, such as synthetic resin. In addition, as shown in FIG. 1, the insulators 44 are arranged on respective axial faces of the stator core 42. As shown in FIG. 3, the insulators 44 each have a cover portion 48 that covers the teeth 46 of the stator core 42. The cover portion 48 electrically insulates the teeth 46 from the coils 43.

The cover portion 48 of each insulator 44 has a pair of wall portions 50a, 50b that are arranged in the radial direction. The coils 43 are wound around the teeth 46 at positions between the wall portions 50a, 50b. The insulator 44 arranged on one axial face of the stator core 42 has a connector portion 51 that has terminals to which the coils 43 are connected (see FIG. 2).

As shown in FIG. 2, the resolver rotor 13 has a substantially elliptical shape in front view (when seen from the axial direction). The outer periphery of the resolver rotor 13 faces the teeth 46 of the resolver stator 12 with a clearance left therebetween. When the rotary shaft 11 rotates, the resolver rotor 13 also rotates together with the rotary shaft 11, and the clearance between each tooth 46 of the resolver stator 12 and the resolver rotor 13 changes. When alternating current is supplied to the exciting coils 43 of the resolver stator 12, outputs corresponding to changes in the clearance are generated in the output coils 43. The rotation angle of the rotary shaft 11 is detected on the basis of the outputs. The exciting coils 43 are provided on all the respective teeth 46, and the output coils 43 include the SIN output coils 43 and the COS output coils 43. The SIN output coils 43 and the COS output coils 43 are alternately provided on the teeth 46 in the circumferential direction. The phase of a change in amplitude of the voltage output from each SIN output coil 43 and the phase of a change in amplitude of the voltage output from each COS output coil 43 are different from each other by 90°. The rotation angle of the rotary shaft 11 is detected by performing signal processing on the output voltages.

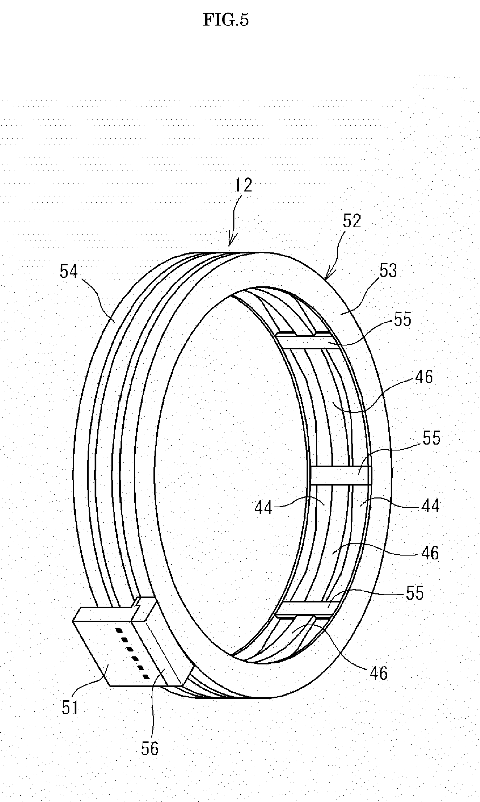

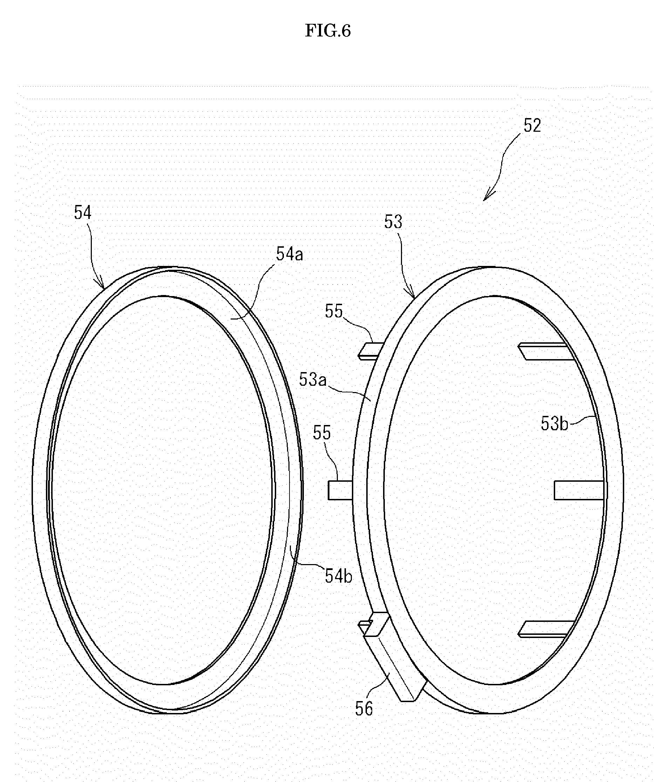

As shown in FIG. 1, the resolver stator 12 further includes a cover member 52 that covers the coils 43. FIG. 5 is a perspective view that shows the resolver stator 12 provided with the cover member 52. FIG. 6 is an exploded perspective view of the cover member 52. As shown in FIG. 5 and FIG. 6, the cover member 52 is formed of an annular first cover portion 53, an annular second cover portion 54 and a plurality of pillars 55. The first cover portion 53 and the second cover portion 54 cover the coils 43 from respective axial sides of the resolver stator 12. The pillars 55 are arranged between the adjacent teeth 46 to couple the first and second cover portions 53, 54 to each other.

The first cover portion 53 is formed in an annular shape. A box-shaped connector cover 56 is fixed to the outer periphery of the first cover portion 53. The connector cover 56 covers one axial side (right side in FIG. 5) of the connector portion 51. In addition, as shown in FIG. 1, the first cover portion 53 is formed of an annular portion 53a and an annular plate portion 53b, and formed in an L-shape in cross section. The annular portion 53a is fitted to a step portion 49 formed in the outer periphery of the insulator 44 with the coils 43 part on one axial side (right side in FIG. 1) of the stator core 42 covered with the annular plate portion 53b from the outer side in the axial direction.

The second cover portion 54 is formed in an annular shape as in the case of the first cover portion 53. The second cover portion 54 is formed of an annular portion 54a and an annular plate portion 54b, and formed in an L-shape in cross section. The annular portion 54b is fitted to a step portion 49 formed in the outer periphery of the insulator 44 with the coils 43 part on the other axial side (left side in FIG. 1) of the stator core 42 covered with the annular plate portion 54b from the outer side in the axial direction.

As shown in FIG. 6, the one axial ends of the multiple (eight in the illustrated example) pillars 55 are fixed to the annular plate portion 53b of the first cover portion 53 at regular intervals in the circumferential direction. The other axial ends of the pillars 55 are fixed to the annular plate portion 54b of the second cover portion 54 by welding. As shown in FIG. 2 and FIG. 5, the pillars 55 are arranged between the adjacent teeth 46.

As shown in FIG. 3, a radially outer face 55a of each pillar 55 is arranged with a clearance left between the radially outer face 55a and the inner periphery 45a of the annular portion 45 of the stator core 42. Radially inner faces 55b of the pillars 55 are arranged on substantially the same circular plane as the circular plane on which inner peripheries 46b1 of the distal end portions (radially inner end portions) 46b of the teeth 46 are arranged. A radially inner end portion 55c1 of each circumferential side face 55c of each pillar 55 is arranged with a labyrinth clearance S left between the radially inner end portion 55c1 and a circumferential side face 46b2 of the distal end portion 46b of the tooth 46 next to the radially inner end portion 55c1. The labyrinth clearance S is desirably set to 0.01 mm (a size at which assembly is not interfered with) to 0.10 mm (a size that is smaller than a size of foreign matter in the lubricating oil). Furthermore, each of both side faces 55c of each pillar 55 is a concave curved surface that is further apart from the side face 46b2 of the next tooth 46, from the radially inner end portion 55c1 toward a radially outer end portion 55c2 (i.e., that is closest to the side face 46b2 at the radially inner end portion 55c1, and farthest from the side face 46b2 at the radially outer end portion 55c2).

With the thus configured resolver 10, when the lubricating oil is injected radially outward from the oil feeding ports 17 of the rotary shaft 11, the lubricating oil is injected to the rolling bearing 14 and thus the rolling bearing 14 is lubricated. However, the lubricating oil injected from the oil feeding ports 17 may also be injected to an inner peripheral portion of the resolver stator 12 next to the rolling bearing 14. At the inner peripheral side of the resolver stator 12, the radially inner end portions 55c1 of the respective circumferential side faces 55c of each pillar 55 are arranged with the labyrinth clearances S left between the radially inner end portions 55c1 and the distal end portions 46b of the teeth 46 next to the respective side faces 55c. Therefore, the labyrinth clearances S make it possible to suppress entry of the lubricating oil into spaces between the distal end portions 46b of the adjacent teeth 46. In addition, even if the lubricating oil enters the spaces between the distal end portions 46b of the adjacent teeth 46, the lubricating oil flows along the concave curved surface formed on each of both side faces 55c of each pillar 55, toward the radially outer end portion 55c2 so as to be further apart from the side face 46b2 of the distal end portion 46b. With this configuration, the lubricating oil is less likely to be injected and to adhere to the coils 43 wound around the teeth 46. Thus, it is possible to effectively suppress damage to the coils 43 due to foreign matter contained in the lubricating oil. As a result, the coils 43 no longer require coating treatment, so the production efficiency is increased. In addition, in the case of a resolver stator which has the coated coils 43, it is possible to suppress peeling of the coating.

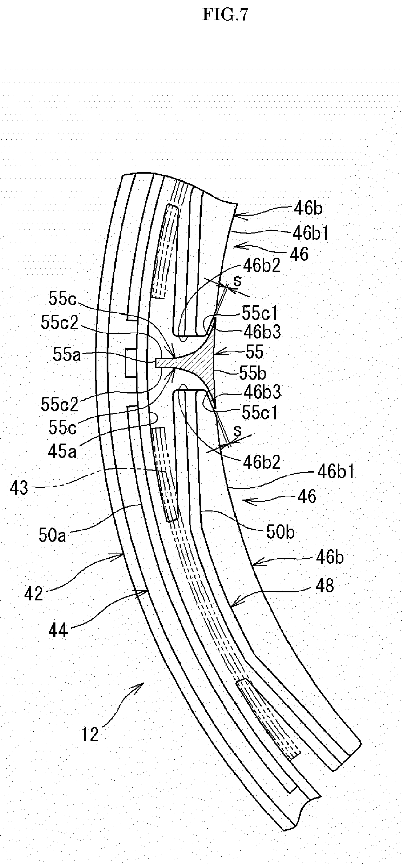

FIG. 7 is a partially enlarged front view of the resolver stator 12 of the resolver 10 according to a second embodiment of the invention. In the second embodiment, tapered surfaces 46b3 are respectively formed on the side faces 46b2 of the distal end portion 46b of each tooth 46. Accordingly, the radially inner face 55b of each pillar 55 is formed to have a circumferential width that is greater than that in the first embodiment (see FIG. 3).

At the radially inner end portion of each side face 46b2 of each tooth 46, the tapered surface 46b3 is formed to face a concave curved surface formed on the side face 55c1 of the corresponding pillar 55 so as to form a labyrinth clearance S along the radially inner end portion 55c1 of the concave curved surface. The labyrinth clearance S is desirably set to 0.01 mm to 0.10 mm as in the case of the first embodiment. Because the other configurations of the second embodiment are similar to those of the first embodiment, the description thereof is omitted. Note that the tapered surfaces 46b3 are formed on the respective side faces 46b2 of the distal end portion 46b of each tooth 46. Alternatively, convex or concave curved surfaces may be formed instead of the tapered surfaces 46b3.

With the thus configured resolver 10, the labyrinth clearance S is formed along the radially inner end portion 55c1 of each of the concave curved surfaces of each pillar 55. Therefore, even if the lubricating oil enters the space between the adjacent teeth 46 through the labyrinth clearance S, the direction in which the lubricating oil enters the space is a direction along which the lubricating oil is further apart from the distal end portion 46b of the tooth 46. With this configuration, it is possible to effectively suppress injection of the lubricating oil to the coils 43 wound around the teeth 46. Thus, it is possible to further effectively suppress damage to the coils 43 due to foreign matter contained in lubricating oil.

Note that the invention is not limited to the above-described embodiments, and modifications may be made to the above-described embodiments as needed. For example, in the above-described embodiments, each side face 55c of each pillar 55 is a concave curved surface. Alternatively, each side face 55c may be a tapered surface that is linearly slanted. In addition, in the above-described embodiments, the resolver 10 is used to detect the rotation angle of the rotary shaft 11 of the motor generator, and the resolver 10 is fitted to the housing 35 of the motor generator. However, in order to detect the rotation angle of a rotary shaft of a device other than a motor generator, the resolver 10 may be fitted to a housing of the device.

With the resolver according to the invention, it is possible to suppress damages to the coils.

## Claims

1. A resolver, comprising:
an annular resolver stator that is fixed to a housing, and that has a plurality of teeth around which coils are wound, which are formed on an inner periphery of the resolver stator, and which are arranged at given intervals in a circumferential direction; and
a resolver rotor that is arranged radially inward of the resolver stator, and that is rotatable together with a rotary shaft that is supported by the housing via a rolling bearing, wherein
the resolver stator includes a pair of cover portions that cover the coils from both axial sides of the resolver stator, and a plurality of pillars arranged between the adjacent teeth to couple the cover portions to each other, and
each pillar has circumferential side faces each of which has a radially inner end portion that is arranged with a labyrinth clearance left between the radially inner end portion and a radially inner end portion of the tooth next to the side face, and each of which is a concave curved surface or a tapered surface so as to be further apart from the tooth from the radially inner end portion toward a radially outer end portion of the side face.

2. The resolver according to claim 1, wherein the radially inner end portion of each tooth has a tapered surface or a curved surface that faces the concave curved surface or tapered surface of a corresponding one of the pillars to form the labyrinth clearance along the radially inner end portion of the concave curved surface or tapered surface of the pillar.
